# EUROPEAN PATENT SPECIFICATION

(11) **EP 3 461 074 B1**
(45) Date of publication and mention of the grant of the patent: **21.12.2022**
(21) Application number: 17382631.4
(22) Date of filing: 21.09.2017
(51) Int. Cl.: H04L 51/234, G06Q 50/18, H04W 4/14, H04W 12/06, G06Q 10/10, G06F 21/33, H04L 9/40

(54) **METHOD OF CERTIFICATION OF AN ELECTRONIC CONTRACT FOR ELECTRONIC IDENTIFICATION AND TRUST SERVICES (EIDAS)**
VERFAHREN ZUR ZERTIFIZIERUNG EINES ELEKTRONISCHEN VERTRAGS FÜR ELEKTRONISCHE IDENTIFIKATIONS- UND VERTRAUENSDIENSTE (EIDAS)
PROCÉDÉ DE CERTIFICATION D'UN CONTRAT ÉLECTRONIQUE DE SERVICES D'IDENTIFICATION ET DE FIDUCIE ÉLECTRONIQUES (EIDAS)

(43) Date of publication of application: 27.03.2019
(73) Proprietor: Lleidanetworks Serveis Telemàtics, S.A., 25003 Lleida (ES)
(72) Inventor: SAPENA SOLER, Francisco, 25003 Lleida (LLEIDA) (ES)

(56) References cited:
- EP-A1- 2 846 500
- EP-A1- 3 188 435
- US-B2- 8 341 023

## Description

### OBJECT OF THE INVENTION

The object of the invention is framed within the field of technologies of information and communication.

More specifically, the method described here is aimed at applications for certifying intervening parties, send, receipt and content of electronic documents.

### BACKGROUND OF THE INVENTION

The world of digital certification and contracts has already been developing for a number of years now; however, there is general confusion among the actors of the world of digital certification between the certification authorities, the digital companies, the e-delivery providers, the certification processes, the processes that are certifiable and the different methods. In addition, the digitally-signed documents only include information on who signs them and their content is maintained unmodified, but they do not contain the information on their sending, their delivery, their acceptance or rejection if other digital means are used to accept and to digitally sign a contract.

The most common method for contracts has been notice of appearance and concentrating all actions using one single CA for the certificates, the signatures and doing all of this in one single location. In itself, it is the method which a priori may be the simplest, but the problem emerges that the number of required certificates, locations where to sign and where, when preparing a notice of appearance, digital presence or periodic access is required to avoid missing notifications. In Spain alone, there are around 80,000 digital entities to which access is obligatory if you wish to operate nationally.

The previously cited drawbacks must be resolved and allow any digital certificate to be used which is configured in the proxy CA such that the process can be initiated at any time both by email and by SMS; there being a record of all the steps taken and such that it can be demonstrated at any time who the actors of the contract process are and when and to what point the contract process has progressed.

An electronic trust service consists of:
- The creation, verification and validation of electronic signatures, electronic stamps or electronic time stamps, certified e-delivery services and certificates relating to these services.
- The creation, verification and validation of certificates to authenticate websites.
- The preservation of signatures, stamps or electronic certificates relating to these services.

In this sense, an electronic identification and trust service (eIDAS) framework must be established, by means of implementing eIDAS, the electronic identification and trust services for electronic transactions are supervised. eIDAS regulates the electronic signatures, the electronic transactions, the bodies involved and their inclusion processes to provide a safe way for users to conduct business online and electronic transfer of funds or transactions with public services. Both the signatory and the recipient have access to a higher level of convenience and safety. Instead of depending on traditional methods, such as email, fax services or appearing in person to present paper documents, now cross-border transactions can be carried out, for example using "1 click" technology.

Therefore, the implementation of elDAS establishes standards for which electronic signatures, qualified digital certificates, electronic stamps, time marks and other tests for authentication mechanisms allow electronic transactions with the same legal entity as the transaction carried out on paper.

EP2846500 (LLEIDANETWORKS SERVEIS TELEMATICS) discloses a certification method of contracts in an electronic format wherein a telecommunication operator certifies sending a contract by a user customer of said operator to another user which is not a customer of the telecommunication operator by means of an electronic mail and/or SMS; and this can sign by means of the response to the electronic mail or to the SMS the acceptance or rejection of the contract in a reliable way, generating proof of the transaction in every moment, so that it can be considered a legally binding contract since the entire process is certified by a telecommunication operator; whereas EP3188435 (LLEIDANETWORKS SERVEIS TELEMATICS) discloses a method for the certification of electronic mails with a recognised electronic signature wherein a telecommunications operator certifies the sending of a certified electronic mail on the part of a user client of said operator to another user non-client of the telecommunications operator respecting at all times the chain of custody and the original recognised electronic signatures in the resending and the certification, generating evidence at all times of the transaction, in such a way that it can be used as reinforced evidence in any court or as a reliable demonstration of a given transaction.

US8341023 (BENISTI ET AL) discloses a certified email system for providing a time stamp for a presented file, particularly when the presented file is an email. Preferably a demanding party receives the email; generates a unique HASH; digitally signs the unique HASH; and sends the signed HASH and a time-stamp request call to a web services time-stamp conduit (WSTC). The WSTC receives the request and signed HASH from the demanding party and obtains a time stamp. The WSTC sends the time stamp back to the demanding party, which sends a time-stamp notification to the original sender of the email and, optionally, the recipient(s) of the email. Multiple branded or customized demanding servers can efficiently run using one web services time-stamp conduit. An integrated detailed billing system capable of pass-through client billing, keyword search functionality, a multi-party content management system, and convenient web-based automated verification (file or HASH) services are also provided thereby.

The problem found in the prior art is that of the contract being delivered to the recipient; hence the contract itself can be redistributed or manipulated and also remains on the servers through which the contract has been delivered.

### DESCRIPTION OF THE INVENTION

In an aspect of the invention, the object of the invention relates to a method in which a telecommunications operator or an e-delivery provider can send contracts by email to one or a number of recipients, certifying the content of the contract and with a link to a proxy server of a CA (certification authority) who will verify the digital certificate of the recipient and their identity, resending the communication to a contract server where the contract can be verified, accepted or rejected and generate proof of the transaction as a communications operator where the contract, the contracting entity, the certificate issued by the CA relating to the contracting entity and all the transactional data required to demonstrate the transaction are found.

The object of the invention provides a method according to claim 1 for the certification of a contract carried out electronically, using robust identification at both ends; identification of the client by means of a digital certificate of signatures which the CA will check and identification of the provider by means of contracting the service to the e-delivery provider, the communications or telecommunications operator, certifying all the evidence of the electronic transactions.

According to what was previously stated, the object of the invention is a method of certification of an electronic contract with the characteristic of using a proxy of a third party certification authority to verify the identity of the contracting party using the digital certificate inserted into the browser of the contracting party, certifying the entire process by means of a telecommunications operator or a telecommunications provider which can also be called a communications provider or electronic communications provider, this always being an e-delivery provider. Lastly, the client of the transmitting electronic communications provider receives a certificate according to which the contract has or has not been made, including the original email, the contract, date, time and traceability of the same, a unique transaction number and the CA certificate with the identification data contained in the digital certificate contained in the browser which unequivocally identifies the contracting party.

The method of the invention can be used for certifications of contracts and their content and can be implemented using email or SMS messages.

### DESCRIPTION OF THE DRAWINGS

In order to complement the description being made and with the object of helping to better understand the characteristics of the invention, in accordance with a preferred practical embodiment thereof, said description is accompanied, as an integral part thereof, by a set of figures where, in an illustrative and nonlimiting manner, the following has been represented:

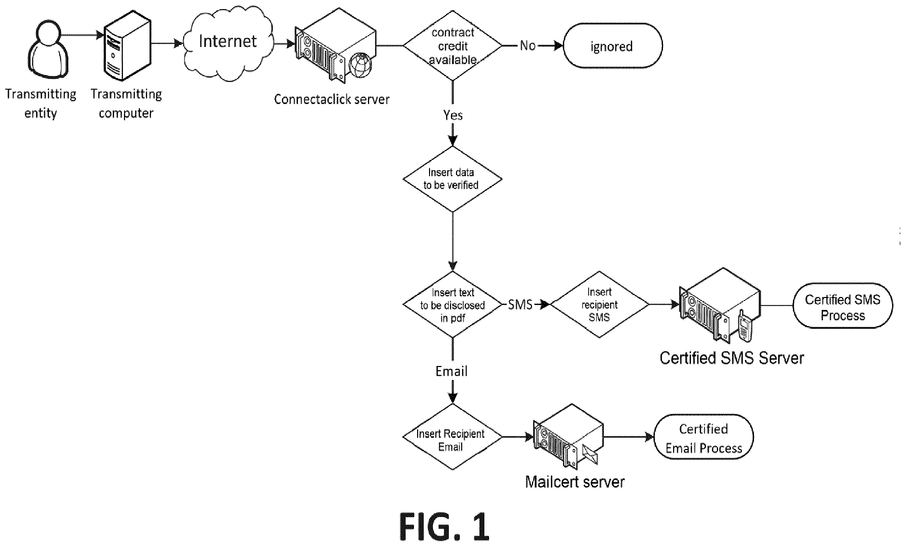

Figure 1: shows a flow diagram where an embodiment of the method of the invention is represented aimed at an electronic transaction relating to an electronic contract, the process being initiated by the transmitting entity to introduce the recipient data and the data to verify the contract.
Figure 2 shows a flow diagram where an embodiment of the method of the invention is represented aimed at an electronic transaction relating to an electronic contract, the process being initiated by means of a certified SMS or SMS.
Figure 3 shows a flow diagram where an embodiment of the method of the invention is represented aimed at an electronic transaction relating to an electronic contract, the process being initiated by means of a certified email or an email.

### PREFERRED EMBODIMENT OF THE INVENTION

The method for the electronic contract object of the invention can be implemented in a platform associated with a communications provider also object of this invention and accessible to a receiving entity and a transmitting entity; to the receiving entity through a receiver or a receiving device (such as a smartphone or a computer of a receiver), and to the transmitting entity through a transmitter or a transmitting device (such as a computer or similar device of a transmitter) and a series of servers interconnected to each other, said servers can be:
- A contract server called a Connectaclick server, it is called this as it is a solution implementing electronic contract systems such as electronic contract systems using email, web and SMS in an indistinct manner. The contract server being closely connected to the telecommunications provider or being part of the same.
- An email management server called Mailcert, a server which allows email to be managed with evidence collection from said emails, evidence which can include amongst others: the headers, the body and its attachments.
- A Mailcert database server which stores the content of the original email, including headers, body and attachments, the log portions corresponding to the sending and the resolution information of the recipient email server. It stores the historic data.
- A time stamp server or time stamp unit (TSU), a time stamp system implemented in-situ provided by a CA for the time stamping of documents, preferably PDFs, evidence generated by the certification systems. This server is preferably located in the infrastructure of the telecommunications operator but in certain circumstances, if required, it can be an entity of a third party and therefore be physically located outside of the infrastructure of the telecommunications operator.
- An evidence generation server called a TSA server, a server generating documents, preferably in PDF format which comprise evidence resulting from the compilation of said evidence during the contract process.
- A validation server called a CA validation proxy which is a server responsible for ensuring the identity of the recipient by means of using a digital certificate contained in the browser of the recipient.
- A certified message server responsible for sending certified messages from the transmitter of the contract to the receiver of the contract, preferably SMS, to the GSM network in the case of opting for carrying it out by means of SMS.
- A generated documents server responsible for storing bulks of generated electronic contract certificates.

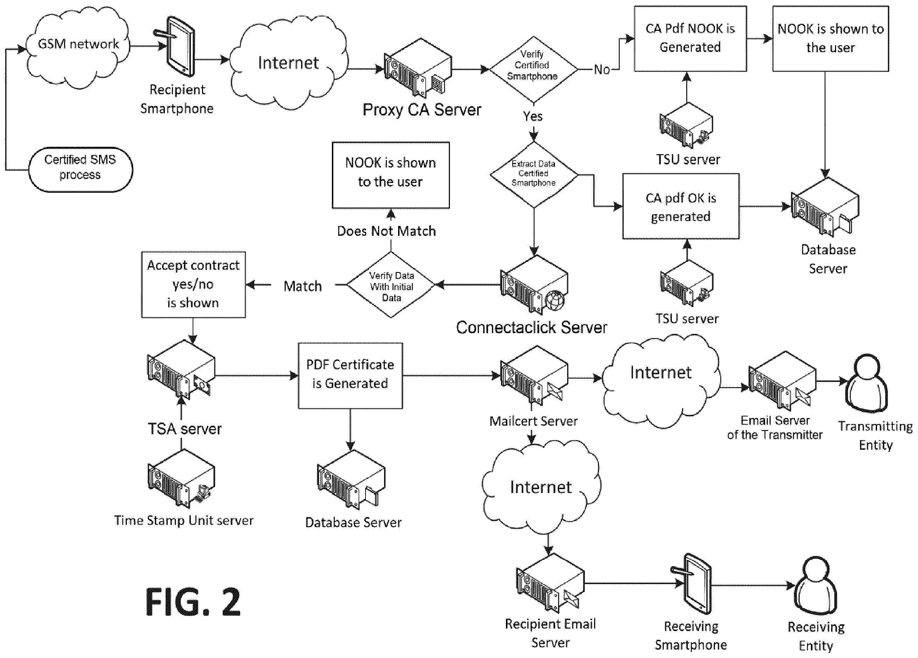

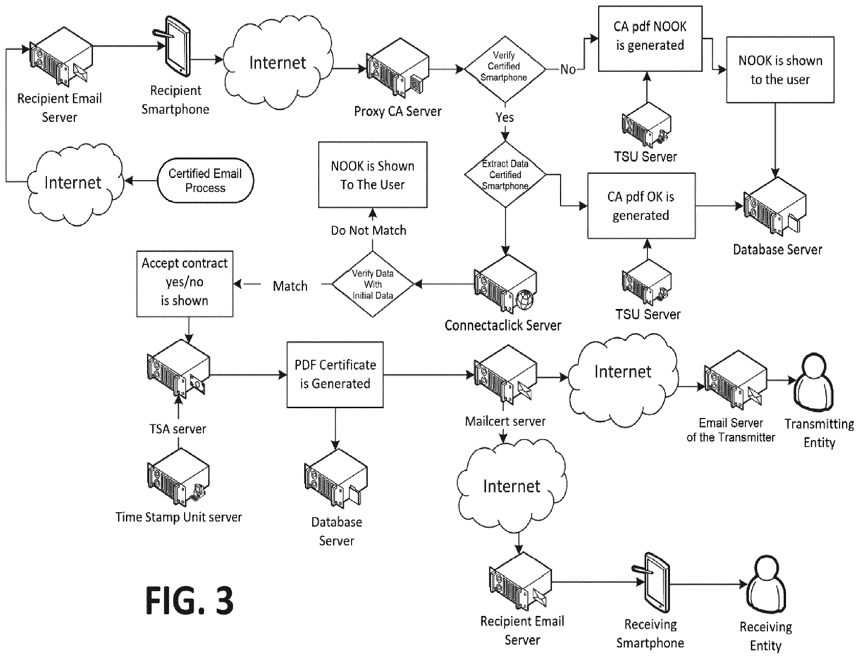

The method for the certification of an electronic contract object of the second aspect of the invention has two possible embodiments distinguished from each other by using SMS messages, as emerges from Figure 2, or emails, as emerges from Figure 3, that is to say, certified SMS or a certified email (hereinafter certified email).

The method of the second aspect of the invention thereby allows the generation of a certified electronic contract to be carried out, where a transmitting entity, by means of an electronic transmitting device, such as their computer, accesses the contract server (Connectaclick server) by means of access to a data network such as the internet, being identified as a transmitter.

Once the user is authenticated, the data of the client to be verified, the electronic contract (hereinafter the contract) that they wish to execute and the telephone number or email address of the receiver who is called the receiver or recipient throughout this document are introduced. The selection of one or other type of message will determine the steps to be followed such that:
- if a telephone number is introduced, an SMS will be sent by way of a certified SMS server and the process will be initiated with certified SMS.
- if an email is introduced, a certified email will be sent by way of the Mailcert server and the process will be initiated with a certified email.

The process with certified SMS is initiated when the receiving electronic device of the recipient receives the message which has access capability and data communication such as a smartphone, said message contains a URL (internet address) which links to a proxy server of a CA server by way of which all the communication with the rest of the servers is carried out.

The process with certified SMS continues with access on the part of the recipient to said URL where the proxy server of the CA requests a digital certificate, from among the possible content in the browser of the receiving device in order to be used in the transaction.

If it does not have a digital certificate, it is not valid or it cannot access the same, the proxy server of the CA finalizes the process and shows that the process cannot continue, generating a non-compliance file called "CA pdf NOOK" and which is preferably in PDF format which will be stored on the generated PDF server; optionally, a time stamp from a TSU server can be added to said non-compliance file (CA pdf NOOK). If it has the certificate, a series of data are extracted which contain the certificate for its subsequent verification, generating a compliance file called "CA pdf OK" using said data, at the same time and as occurs with the non-compliance file, optionally a time stamp from a TSU can be added and it is subsequently stored in the generated PDF server.

In this way, when the data contained in the certificate of the browser match the data initially introduced, the contract to be signed is then shown. If the recipient does not accept the contract, for example refusing to sign, it is shown that the recipient has not accepted and the process is finalized, whereas if they accept the contract, they are asked for an email address of the recipient to send a copy for the recipient and the session is finalized with the recipient.

Once the session with the recipient is finalized, the evidence generation server, TSA server, generates a certificate of the transaction by means of compiling all the data relating to the transmission of data on the internet, the contract itself and its content, the generated PDFs of the proxy CA and any transactional data of the operation used. Once generated, the resulting certificate is signed with the digital signature of the communications provider and a time stamp by way of a time stamp server (TSU server).

The resulting certificate, once stamped, is sent to the Mailcert server responsible for transmitting the email, sending two copies of the certificate of the contract already signed and all the generated evidence, one to the transmitting entity and another to the receiving entity which will be received by the respective email servers in order to be collected by their respective users.

In some embodiments in which the method uses certified mail or certified email, the method is similar and is initiated when an incoming email server of the recipient receives the certified email initially sent, where said certified email can contain a contract to be signed, but which contains a URL (internet address) which points to a proxy server of a CA by way of which all the communication with the rest of the servers is carried out. The process with certified email continues when the recipient, receiver, accesses their email by way of their smartphone or computer and accesses the URL included in the email where the CA proxy server asks them what digital certificate contained in the browser of the smartphone or computer is going to be used in the transaction. If it does not have or does not have access to them, the proxy CA server shows that the process cannot continue and generates a CA pdf NOOK file in PDF format which will be stored on the generated documents server to which a time stamp (TSU) can be added. If the browser has the certificate, the data that it contains for its subsequent verification are extracted, generating a CA pdf OK file with the data, a time stamp from a TSU server can be added and will be stored on the generated PDF server. The process continues when the user accesses the Connectaclick server by way of the proxy CA where it is verified that the data contained in the certificate of the browser match the data initially introduced and the contract to be signed will be shown. If the recipient does not accept, it is shown that they have not accepted and it is finalized. If they accept the contract, they are asked for the email to send a copy and the session with the recipient is finalised.

Once the session with the recipient is finalized, the evidence generating server prepares the certificate of the transaction with all the internet data, the contract, the generated PDFs of the proxy CA and any transactional data of the operation used. Once completed, the resulting certificate is signed with the digital signature of the communications provider and a time stamp by way of a time stamp server (TSU server). The generated certificate is sent to a Mailcert server responsible for transmitting the email, sending two copies of the certificate of the signed contract and all the generated evidence, one to the transmitting entity and another to the receiving entity which will be received by the respective email servers in order to be collected by their respective users.

According to the foregoing, the method object of the invention provides the advantage of the digital evidence and certificates used being able to come from different CAs or certification entities, in possible alternative embodiments, a second CA can be used, being a provider of the proxy CA server and a third e-delivery provider who is responsible for ultimately packaging all the evidence of the contract, generating the certificate of the entire process of the contract.

## Claims

1. A method of certification of an electronic contract, the method comprising:
• access on the part of a transmitter to a contract server of a telecommunications operator,
• uploading the electronic contract to be signed to said contract server,
• introduction of data of a receiver, user of a receiving entity, where said data comprise at least one of: recipient email address and recipient telephone number,
• selecting a recipient telephone number or recipient email address,
• sending to the receiver: an SMS by means of a certified SMS server or a certified email by means of an email management server where both the certified SMS and the certified email comprise at least one URL which links to a proxy server of a certification authority, CA, server by means of which all the communication is carried out,
• access on the part of the receiver to said URL and selection of a digital certificate to be used in the transaction, and
• access on the part of the receiver to the contract server by means of the proxy server of the CA to verify data contained in the digital certificate, the method further comprising:
• a verification of data contained in the digital certificate by means of a comparison so that the identity of the recipient is ensured,
• storing the content of the original email and any attachments in a database server of the telecommunications operator,
• showing the electronic contract to the recipient once the identity of the recipient is ensured,
• signing of the contract by the recipient,
• sending a copy of the signed contract to the recipient,
• generation of evidence by the evidence generation server,
• generating, by means of the evidence generation server, a transaction certificate with all the network data, the contract, the documents generated by the proxy server of the CA and transactional data of the operation used,
• signing the certificate of the transaction with a digital signature of the telecommunications operator,
• applying time stamps by means of a time stamp server to the certificate of the transaction once it has been signed, and
• sending at least two copies of the signed and stamped certificate of the transaction and all generated evidence, one to the transmitting entity and another to the receiving entity in order to be collected by their respective users.

2. The method according to claim 1, wherein no digital certificate or access to the same is present, the method being **characterised in that** it comprises:
• the proxy server of the CA determining that the process cannot continue,
• generating a non-compliance file by means of the proxy server,
• storing said non-compliance file in a generated documents server, and
• time stamping of said non-compliance file in the generated documents server.

## Patentansprüche

1. Verfahren zur Zertifizierung eines elektronischen Vertrags, wobei das Verfahren umfasst:
• Zugriff eines Senders auf einen Vertragsserver eines Telekommunikationsbetreibers,
• Hochladen des zu unterzeichnenden elektronischen Vertrags auf den Vertragsserver,
• Eingabe von Daten eines Empfängers, Benutzers einer empfangenden Einheit, wobei diese Daten mindestens eines der folgenden umfassen: Empfänger-E-Mail-Adresse und Empfänger-Telefonnummer,
• Auswählen einer Empfänger-Telefonnummer oder Empfänger-E-Mail-Adresse,
• Versand an den Empfänger: eine SMS über einen zertifizierten SMS-Server oder eine zertifizierte E-Mail über einen E-Mail-Management-Server, wobei sowohl die zertifizierte SMS als auch die zertifizierte E-Mail mindestens eine URL umfassen, die auf einen Proxy-Server einer Zertifizierungsstelle verweist, CA, Server, über den die gesamte Kommunikation durchgeführt wird,
• Zugriff seitens des Empfängers auf die URL und Auswahl eines digitalen Zertifikats, das bei der Transaktion verwendet werden soll, und
• Zugriff seitens des Empfängers auf den Vertragsserver über den Proxy-Server der CA, um im digitalen Zertifikat enthaltene Daten zu verifizieren,
wobei das Verfahren ferner umfasst:
• eine Überprüfung der im digitalen Zertifikat enthaltenen Daten durch einen Abgleich, so dass die Identität des Empfängers sichergestellt ist,
• Speichern des Inhalts der ursprünglichen E-Mail und etwaiger Anhänge auf einem Datenbankserver des Telekommunikationsbetreibers,
• dem Empfänger den elektronischen Vertrag vorzeigen, sobald die Identität des Empfängers sichergestellt ist,
• Vertragsunterzeichnung durch den Empfänger,
• Versand einer Kopie des unterschriebenen Vertrags an den Empfänger,
• Beweiserstellung durch den Beweiserstellungsserver,
• Generierung eines Transaktionszertifikats mit allen Netzwerkdaten, dem Vertrag, den vom Proxy-Server der CA generierten Dokumenten und Transaktionsdaten des verwendeten Vorgangs mittels des Evidenzgenerierungsservers,
• Signieren des Transaktionszertifikats mit einer digitalen Signatur des Telekommunikationsbetreibers,
• Aufbringen von Zeitstempeln mittels eines Zeitstempelservers auf das Zertifikat der Transaktion, nachdem es signiert wurde, und
• Senden von mindestens zwei Kopien des unterzeichneten und abgestempelten Transaktionszertifikats und aller erzeugten Nachweise, eine an die übermittelnde Stelle und eine andere an die empfangende Stelle, damit sie von ihren jeweiligen Benutzern abgeholt werden.

2. Verfahren nach Anspruch 1, wobei kein digitales Zertifikat oder Zugriff darauf vorhanden ist, wobei das Verfahren **dadurch gekennzeichnet ist, dass** es umfasst:
• der Proxy-Server der Zertifizierungsstelle feststellt, dass der Prozess nicht fortgesetzt werden kann,
• Generieren einer Non-Compliance-Datei über den Proxy-Server,
• Speichern der Nichtkonformitätsdatei auf einem generierten Dokumentenserver und
• Zeitstempel der besagten Nichtkonformitätsdatei auf dem Server für generierte Dokumente.

## Revendications

1. Procédé de certification d'un contrat électronique, le procédé comprenant :
• accès de la part d'un émetteur à un serveur contractuel d'un opérateur de télécommunications,
• télécharger le contrat électronique à signer sur ledit serveur de contrat,
• introduction des données d'un destinataire, utilisateur d'une entité réceptrice, où lesdites données comprennent au moins l'un parmi : l'adresse e-mail du destinataire et le numéro de téléphone du destinataire,
• sélectionner un numéro de téléphone ou une adresse e-mail destinataire,
• envoi au destinataire : d'un SMS via un serveur SMS certifié ou d'un email certifié via un serveur de gestion d'emails où tant le SMS certifié que l'email certifié comportent au moins une URL renvoyant à un serveur proxy d'une autorité de certification, CA, serveur au moyen duquel toute la communication est effectuée,
• accès de la part du destinataire à ladite URL et sélection d'un certificat numérique à utiliser dans la transaction, et
• accès de la part du destinataire au serveur contractuel par l'intermédiaire du serveur proxy de l'AC pour vérifier les données contenues dans le certificat numérique,
le procédé comprenant en outre :
• une vérification des données contenues dans l'attestation numérique au moyen d'une comparaison afin de s'assurer de l'identité du destinataire,
• stocker le contenu de l'e-mail d'origine et des éventuelles pièces jointes dans un serveur de base de données de l'opérateur de télécommunications,
• présenter le contrat électronique au destinataire une fois l'identité du destinataire assurée,
• signature du contrat par le bénéficiaire,
• envoi d'une copie du contrat signé au destinataire,
• génération de preuves par le serveur de génération de preuves,
• générer, au moyen du serveur de génération de preuves, un certificat de transaction avec toutes les données du réseau, le contrat, les documents générés par le serveur proxy de l'AC et les données transactionnelles de l'opération utilisée,
• signer le certificat de la transaction avec une signature numérique de l'opérateur de télécommunications,
• apposer des horodatages au moyen d'un serveur d'horodatage sur le certificat de la transaction une fois celui-ci signé, et
• envoyer au moins deux copies du certificat signé et tamponné de la transaction et de toutes les preuves générées, une à l'entité émettrice et une autre à l'entité réceptrice afin qu'elles soient collectées par leurs utilisateurs respectifs.

2. Procédé selon la revendication 1, dans lequel aucun certificat numérique ou accès à celui-ci n'est présent, le procédé étant **caractérisé en ce qu'**il comprend :
• le serveur proxy de l'AC déterminant que le processus ne peut pas continuer,
• générer un fichier de non-conformité à l'aide du serveur proxy,
• stocker ledit fichier de non-conformité dans un serveur de documents générés, et
• horodatage dudit fichier de non-conformité dans le serveur de documents générés.
